# EUROPEAN PATENT APPLICATION

(11) **EP 2 518 812 A2**
(43) Date of publication of application: **31.10.2012**
(21) Application number: 12165585.6
(22) Date of filing: 25.04.2012
(51) Int. Cl.: H01M 10/38, H01M 10/0525, H01M 10/0585

(54) **Method of forming encapsulated solid electrochemical component**

(30) Priority: 26.04.2011 US 201161479145 P
(71) Applicant: EaglePicher Technologies, LLC, Joplin, MO 64801 (US)
(72) Inventor: Hallmark, Christopher, Joplin, MO 64801 (US)
(74) Representative: Skone James, Robert Edmund

(57) **Abstract**

A method of forming an encapsulated solid electrochemical component includes stacking a first separator (3), a solid electrochemical component (4), and a second separator (5) on an upper surface of a vacuum plate to form an electrochemical component assembly, applying a vacuum to the electrochemical component assembly, and applying a first laser beam around at least part of a circumference (21) of the solid electrochemical component (4) in the electrochemical component assembly while applying the vacuum to melt and bond the first and second separators (3,5) together. The method also includes applying a second laser beam around the circumference (21) of the solid electrochemical component (4) in the electrochemical component assembly while applying the vacuum. The second laser beam has a second relatively high power compared to the power of the first laser beam such that the first and second separators (3,5) around the circumference (21) of the solid electrochemical component (4) are cut.

## Description

### BACKGROUND

This disclosure relates to improved methods of encapsulating electrochemical components and, in particular, electrodes such as anodes and cathodes. Specifically, the disclosure relates to methods usable to hold the components involved in the construction of an encapsulated electrode stationary while a laser is utilized to melt and cut the separator material around a circumference of the electrode to encapsulate the electrode. The encapsulated electrodes (i.e., encapsulated anodes and encapsulated cathodes) can then be used to build, for example, a battery and, in particular, a lithium-ion battery. However, as discussed below, the invention is not limited to the encapsulation of electrodes but is applicable to various solid electrochemical components which may require encapsulation with a porous material.

Lithium ion cells utilize a porous separator material to isolate the positive and negative electrodes (anode and cathodes). In a prismatic cell, the electrodes are sandwiched between layers of separator material. A bonding/welding process typically occurs to encapsulate the electrode within the separator to prevent shifting, which would lead to a short and failure of the battery cell. The encapsulation process has typically been performed using heated plates and mechanical tooling designed specifically for one electrode and separator configuration.

Specifically, in typical mechanical thermal transfer methods, the components required to form the encapsulated electrochemical component are placed one on top of each other. For example, to encapsulate a rectangular electrode, first and second rectangular separator sheets are cut to a size slightly larger than the electrode. The separator sheets and electrode are stacked so that the electrode is sandwiched between the first and second separator sheets. Next, bars/plates are lowered over portions of the separator sheet surrounding the electrode so as to apply heat and pressure and thereby bond the separator sheets together. Once the separator sheets are bonded together, mechanical tools are then utilized to cut the encapsulated electrode so as to free the encapsulated electrode from any excess separator material. One problem resulting from this procedure is the difficulty in holding the components together during bonding of the separator material. Thus, the separators and/or electrode are free to move, causing misalignment of the encapsulated electrode. Due to this movement, the openings between melt zone areas may not be uniform. Additionally, the misalignment, which results during mechanical thermal bonding, necessitates the use of more separator material than necessary to encapsulate the electrode in order to accommodate any shifting prior to encapsulation. In addition, the bonding process of the mechanical thermal transfer method takes a great deal of time. The dwell time (amount of time the bars/plates must stay in contact with the separator material so as to bond the separator sheets together) is great in the mechanical thermal transfer method.

Additionally, in general, batteries are formed by alternately stacking cathodes and anodes with separators disposed therebetween. The battery separators are used to physically separate the anode from the cathode, thus avoiding a short circuit. Thus, proper encapsulation by the separator of the electrode is crucial to the function of a battery such as, for example, a lithium-ion battery.

### SUMMARY

The need to provide a more stable means of encapsulating an electrode as well as to provide a uniform encapsulated product dictate the need for a more efficient means of encapsulation. Currently, the methods used to encapsulate electrodes lead to malformed electrodes, misalignment during the sealing process, restriction to a specific electrode configuration, and long dwell times during the bonding process.

It would be advantageous to provide an encapsulation process that results in a stronger bond between separator layers, is adaptable to multiple electrode sizes and/or shapes, eliminates misalignment of the separator layers, reduces dwell time, and decreases the amount of separator material needed/used.

According to one aspect of the invention, two separator sheets or one folded sheet are/is utilized to encapsulate an electrode, such that a first separator layer is disposed under the electrode and a second separator layer is disposed over the electrode, by pulling the layers tightly together and around the electrode with the vacuum of a vacuum table while a laser welds the separator layers together. The result of the use of the vacuum table is a stronger and more consistent bond than in typical mechanical thermal transfer methods. The vacuum table also prevents misalignment of the separator layers. The layers are pulled tightly by the vacuum exerted by the vacuum table and are not allowed to shift during the stacking, bonding, and/or cutting processes. The vacuum also helps to bond the layers together when melted by the laser during the bonding process.

Using the laser to bond has many advantages. The laser bonds the layers together much faster than heated plates. In addition, the laser can accommodate many different shapes and sizes of electrodes. No new bonding plates are needed for different sized and/or shaped electrodes; the laser targeting controller is simply reprogrammed for the new electrode. Thus, there is no restriction as to what type and/or size of electrode is being encapsulated by the separator layers.

As noted above, the use of a laser decreases the amount of time required for the layers to bond together. In typical mechanical thermal transfer processes, the dwell time resulting from the application of heated plates/bars is long; whereas, the application of the laser in the current invention decreases this dwell time. In particular, the use of the current method of encapsulation cuts the dwell time of the conventional mechanical thermal transfer method by 95%. Furthermore, the elimination of shifting and misalignment of the separator layers results in the use of less separator material in the final product than in conventional techniques. Specifically, the disclosed process does not require that a great deal of excess material be provided in case of misalignment or shifting. Instead, the disclosed process only requires an amount of material sufficient to encapsulate the electrode, with a small amount of excess material to be cut off after the bonding process has occurred.

Furthermore, the laser can be used to cut the excess separator material from around the encapsulated electrode after the bonding is completed. This can be done quickly and while the encapsulated electrode is still held in place on the vacuum table.

In various exemplary embodiments, a method of forming an encapsulated solid electrochemical component includes disposing, in order, a first separator, a solid electrochemical component, and a second separator on an upper surface of a vacuum plate to form an electrochemical component assembly and applying a vacuum with the vacuum plate to the electrochemical component assembly. The method further includes applying a first laser beam around at least part of a circumference of the solid electrochemical component in the electrochemical component assembly while applying the vacuum such that portions of the first and second separators around at least part of the circumference of the solid electrochemical component melt and are bonded to each other by the application of the first laser beam forming a melt zone. Finally, the method further includes applying a second laser beam around the circumference of the solid electrochemical component in the electrochemical component assembly while applying the vacuum such that the first and second separators around the circumference of the solid electrochemical component are cut by the application of the second laser beam.

In some embodiments, the solid electrochemical component is an electrode.

In some embodiments, the electrode is a battery electrode.

In some embodiments, the battery electrode is for a lithium-ion battery and includes lithium therein.

In some embodiments, the electrode includes a material selected from the group consisting of lithium, nickel, high surface area carbon, and combinations thereof.

In some embodiments, the first and second separators are formed of an electrically-insulating material.

In some embodiments, the first and second separators are two separate sheets.

In some embodiments, the melt zone does not completely encircle the solid electrochemical component such that at least one opening exists between the first separator and the second separator.

In some embodiments, the step of applying the first laser beam follows a stitch profile that includes a plurality of zig-zags, straight lines, or curved lines.

In some embodiments, the electrochemical component has a rectangular shape.

In some embodiments, the first separator and the second separator are made of a porous, polymer material.

In some embodiments, the vacuum applied through the vacuum plate pulls gas through the first and second separators to cause the first separator, the solid electrochemical component, and the second separator to maintain position while the first and second laser beams are applied to melt, bond, and cut the first and second separators.

In some embodiments, in the step of applying the second laser beam, the second laser beam cuts through the melt zone.

In some embodiments, the steps of applying the first and second laser beams include emitting the laser beams from a stationary laser source and reflecting the laser beams with a moving mirror to direct the laser beams to the electrochemical component assembly on the vacuum plate.

In some embodiments, the first and second laser beams are emitted from a single source.

In some embodiments, the vacuum is applied with the vacuum plate during the disposing step.

In some embodiments, the first laser beam has a first relatively low power and the second laser beam has a second relatively high power. The second relatively high power is higher than the first relatively low power.

In some embodiments, the first laser beam is directed around the circumference of the electrode at a first relatively fast speed and the second laser beam is directed around the circumference at a second relatively slow speed. The first relatively fast speed is higher than the second relatively slow speed.

The invention also relates to encapsulated electrochemical components made by the method described above.

In various exemplary embodiments, a method of making a battery includes forming a plurality of encapsulated solid electrochemical components according to the method described above. A first set of the plurality of encapsulated solid electrochemical components are encapsulated cathodes and a second set are encapsulated anodes. The method of making a battery further includes alternately stacking the encapsulated anodes and cathodes and providing an electrolyte between the stacked encapsulated anodes and cathodes.

The invention also relates to a battery formed by the method of making a battery described above.

In various exemplary embodiments, a method of forming an encapsulated battery electrode includes stacking, in order, a first separator, an electrode, and a second separator on an upper surface of a vacuum plate to form an electrode assembly and applying a vacuum with the vacuum plate to the electrode assembly. The method further includes applying a first laser beam around at least part of a circumference of the electrode in the electrode assembly while applying the vacuum such that portions of the first and second separators around at least part of the circumference of the electrode melt and are bonded to each other by the application of the first laser beam forming a melt zone. The method further includes applying a second laser beam around the circumference of the electrode in the electrode assembly while applying the vacuum such that the first and second separators around the circumference of the electrode are cut by the application of the second laser beam.

### BRIEF DESCRIPTION OF THE DRAWINGS

Various exemplary embodiments of the disclosed method of forming an encapsulated electrochemical component/electrode will be described in detail with reference to the following drawings in which:

Fig. 1 is a perspective view of the vacuum plate used in an exemplary embodiment of the present invention;

Fig. 2 is a perspective view of a first separator placed on a top surface of the vacuum plate of Fig. 1;

Fig. 3 is a perspective view of an electrode placed on a top surface of the first separator of Fig. 2;

Fig. 4 is a perspective view of a second separator placed on a top surface of the electrode and the top surface of the first separator of Fig. 3;

Fig. 5 is a perspective view of Fig. 4 showing a direction of the vacuum;

Fig. 6 is a perspective view of a laser disposed over the components of Fig. 5;

Fig. 7A is a top view of a first separator, electrode and second separator with a straight line stitch melt zone; Fig. 7B is a top view of a first separator, electrode and second separator with a curved line stitch melt zone; and Fig. 7C is a top view of a first separator, electrode and second separator with a zig-zag line stitch melt zone;

Fig. 8 is a perspective view of an encapsulated electrode made with the stitch pattern of Fig. 7A with the extraneous portions of the separator materials cut off; and

Fig. 9 is an enlarged, underside view of the laser of the present disclosure, illustrating the moving mirror.

### DETAILED DESCRIPTION OF EMBODIMENT

The following exemplary embodiments are described below with reference to the construction of batteries, in particular, lithium-ion batteries. The following exemplary embodiments may also be utilized in fuel cell assembly as well as various other solid electrochemical components. All exemplary embodiments af the invention are intended to be used in any applicable field of endeavor.

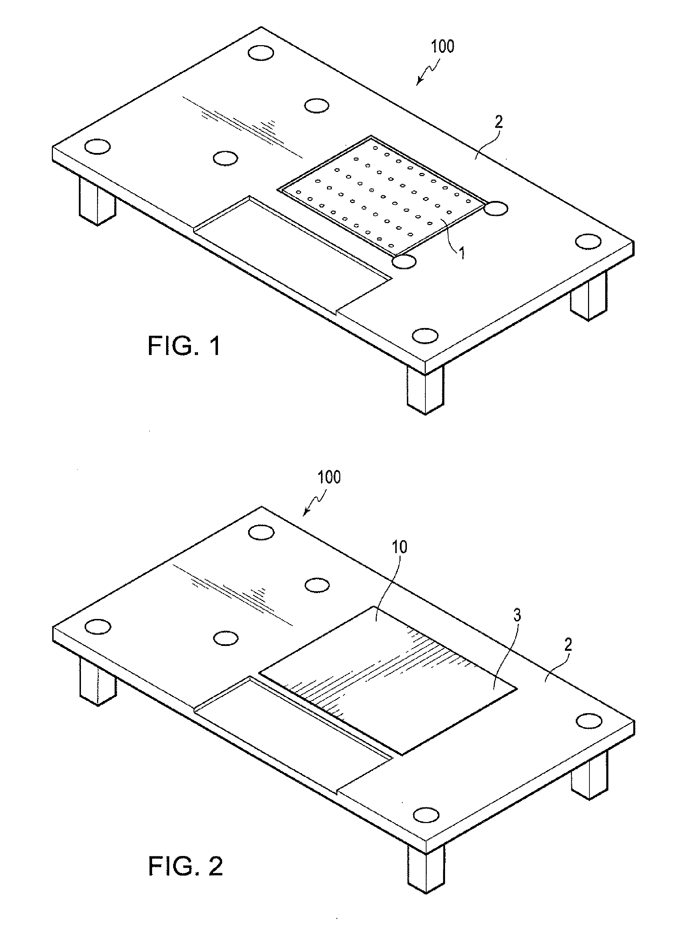

Fig. 1 illustrates a vacuum table 100 that includes a vacuum plate 1 of an exemplary embodiment utilized in the method of encapsulating a solid electrochemical component 4 (i.e., an electrode) in accordance with aspects of the present invention. The vacuum plate 1 is provided to restrict the movement of an electrochemical component assembly 6. A first separator 3 and second separator 5 and solid electrochemical component 4 together form the electrochemical component assembly 6. The vacuum plate 1 can be used during at least some, and preferably all, stages of the method of encapsulating the solid electrochemical component 4. For example, the vacuum plate 1 can be utilized during the step of stacking the components to form the electrochemical component assembly 6 as well as during the application of both the first and second laser beams (as discussed below). Additionally, the present disclosure is not limited to the vacuum plate illustrated in Fig. 1. The vacuum plate 1 in Fig. 1 can be any suitable vacuum plate that pulls gas through the separator materials, thus creating a suctioning force that holds the electrochemical component assembly 6 stationary during the melting and cutting stages.

Fig. 2 illustrates the vacuum table 100 in which the vacuum plate is covered with the first separator 3 in accordance with aspects of the present invention. In Fig. 2, the first separator 3 is placed over an upper surface 2 of the vacuum table 100. The first separator 3 is formed of, for example, an electrically-insulating material or, more specifically, a porous, polymer material.

The first separator 3 can be of any size or shape, as long as it is marginally larger than the solid electrochemical component, which is later placed on the upper surface of the first separator 3. The first separator 3 may be sized to fit exactly on the vacuum plate 1 or the first separator 3 may be slightly larger or smaller than the vacuum plate 1. It is not necessary to make the size and shape of the first or second separators (3 and 5) highly precise. It is only necessary that the separators be larger than the electrochemical component that is to be encapsulated. However, in order to minimize wasted material, it is preferable that the separators be only slightly larger than the component to be encapsulated. There are no particular thickness restrictions to first separator 3, as long as the vacuum plate is able to pull gas through the pores of the first separator 3 to hold the first separator 3 in place.

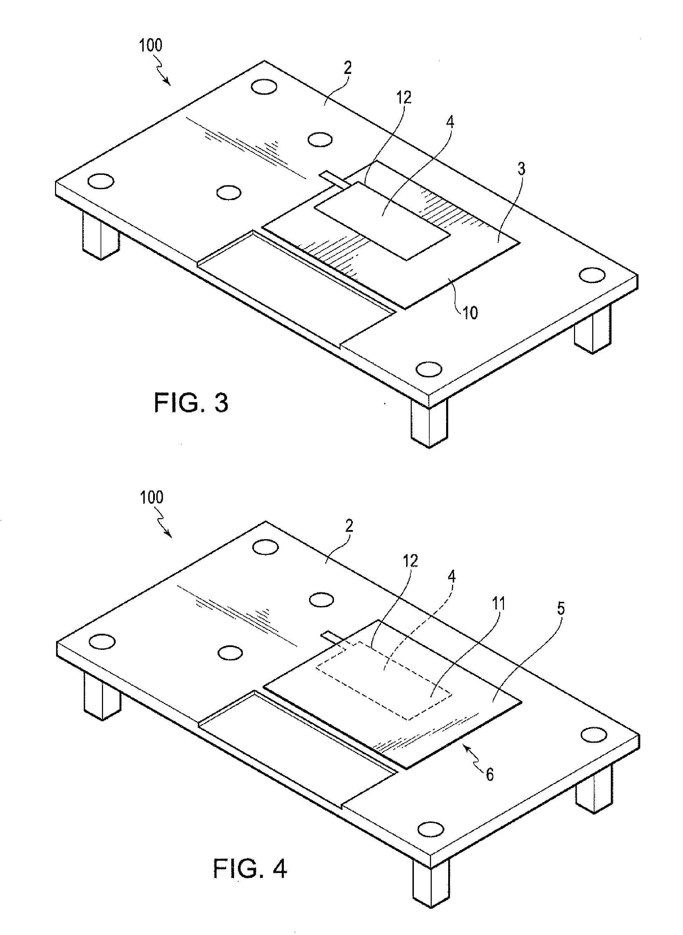

Fig. 3 illustrates a vacuum table 100 with the first separator 3 and solid electrochemical component 4 disposed thereon. In Fig. 3, the solid electrochemical component 4 is placed over an upper surface 10 of the first separator 3, which is previously disposed over the vacuum plate as shown in Fig. 2. The solid electrochemical component 4 can be any type of solid electrochemical component including electrodes (i.e., anodes and cathodes). For example, the solid electrochemical component can be a battery electrode, or more preferably, a lithium-ion battery electrode such that the electrode includes lithium. Additionally, the solid electrochemical component 4 may be made from materials selected from, for example, lithium, nickel, high surface area carbon, and combinations thereof. However, the solid electrochemical component 4 is not restricted to battery electrodes and can also be used in any relevant field that requires the encapsulation of a component with a porous or porous-like material. For example, the solid electrochemical component could be an electrode of a fuel cell. Additionally, the shape of the solid electrochemical component 4 is not restricted. Thus, the solid electrochemical component 4 can be, for example, rectangular, circular, etc. in shape.

In one exemplary embodiment, for example, the solid electrochemical component 4 is an anode. The anode can be made of, for example, graphite, hard carbon, soft carbon, lithium titanate, silicon, tin, atco, m-m alloy, ternary metal vanadates, and metalloids. In another exemplary embodiment, for example, the solid electrochemical component 4 is a cathode. The cathode can be made of, for example, lithium cobalt oxide (lithium cobaltate), lithium manganese oxide (lithium manganate), lithium iron phosphate, lithium nickel manganese cobalt, lithium nickel cobalt aluminum oxide, cobalt oxide, NiCo oxide, layered Mn oxide, iron phosphate, and lithium sulfide.

Fig. 4 illustrates a vacuum table 100 with the first separator 3, solid electrochemical component 4, and second separator 5 stacked on each other. In Fig. 4, the second separator 5 is placed over an upper surface 11 of the solid electrochemical component 4, which is previously disposed over the upper surface 10 of the first separator 3 as shown in Fig. 3. The second separator 5 is formed of, for example, an electrically-insulating material or, more specifically, a porous, polymer material.

The second separator 5 can be of any size or shape, as long as it is marginally larger than the solid electrochemical component 4, which is disposed under the second separator 5. The second separator 5 may be sized to fit exactly on the vacuum plate 1 or the second separator 5 may be slightly larger or smaller than the vacuum plate 1. There are no particular thickness restrictions to the second separator 5, as long as the vacuum plate 1 is able to pull gas through the pores of the second separator 5.

In an exemplary embodiment, the first separator 3 is a separate sheet of material from that of the second separator 5. In another exemplary embodiment, the first separator 3 and the second separator 5 are formed by folding a single piece of separator material over on itself. In this other embodiment, the separator material is placed on the vacuum plate 1. The solid electrochemical component 4 is placed over a portion of the separator material, i.e. the portion of the separator material that functions as the first separator 3. The separator material is then folded, for example near a middle portion, over the upper surface 11 of the solid electrochemical component 4. The portion of the separator material that is folded over the upper surface 11 of the solid electrochemical component 4 functions as the second separator 5. The result is similar for either embodiment in that a layer of separator material is provided on each side of the component 4.

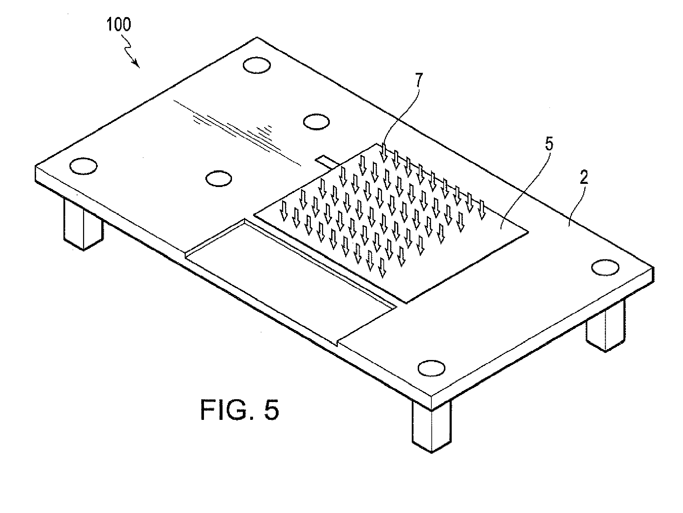

Fig. 5 illustrates the embodiment illustrated in Fig. 4 including the application of the vacuum 7 exerted by the vacuum table 100. The vacuum table 100 applies the vacuum 7 so as to pull gas through the first 3 and second 5 separators. When the first 3 and second 5 separators are formed of a porous material, the gas is pulled through the pores of the porous material and thus the vacuum table functions to suck/pull the separators 3, 5 together as well as the solid electrochemical component 4 due to its disposal between the separators 3, 5. Accordingly, the vacuum 7 causes the electrochemical component assembly 6 to maintain position during the melting, bonding and cutting processes (to be described below) of the first 3 and second 5 separators.

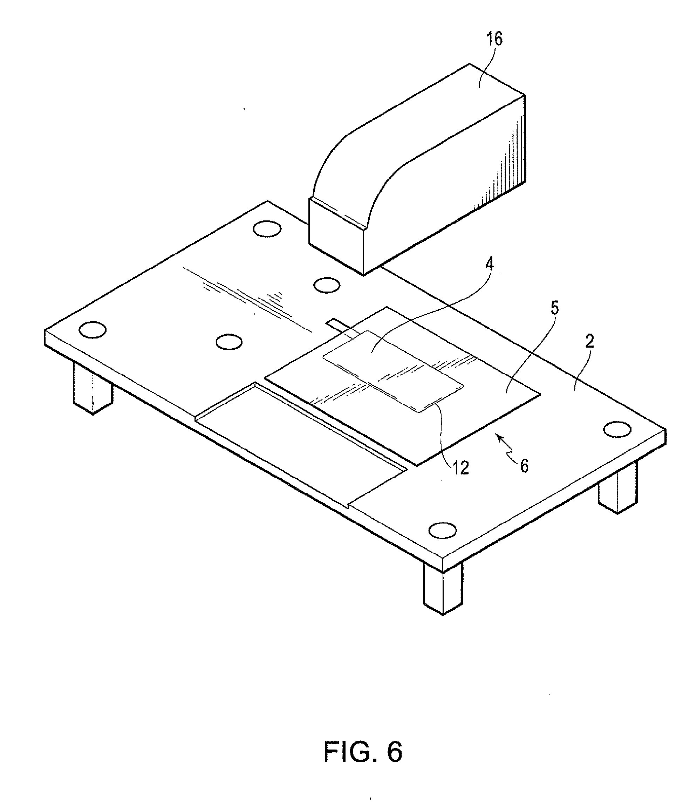

Fig. 6 illustrates the disposal of a laser 16 over the electrochemical component assembly 6 disposed on the upper surface 2 of the vacuum table 100. The laser 16 can be any of various conventional lasers in which the power of the laser beam is variable and controllable and in which the laser beam can be controllably steered (directed) to a target. Such lasers are commonly used for engraving. In accordance with some embodiments of the invention, the laser 16 is controlled to apply two different, adjustable energy level beams. The first laser beam has a relatively low power level whereas the second laser beam has a relatively high power level. The power level of the first laser beam is lower than that of the second laser beam.

In an exemplary embodiment, the first laser beam is initially applied around at least part of a circumference 21 of the solid electrochemical component 4 in the electrochemical component assembly 6 to melt the separators 3, 5 while at the same time the vacuum 7 of the vacuum plate 1 is applied to the electrochemical component assembly 6. The application of the first laser beam by the laser 16 around the circumference 21 of the solid electrochemical component 4 causes the lasered portions of the first 3 and second 5 separators to melt and bond together to form a melt zone 13. The (first) power level of the first laser beam is high enough to melt the separator material, but not high enough to cut through the separator material. The power level used for melting depends on the material (composition and thickness) of the separator material. The melt zone 13 usually does not completely encircle the solid electrochemical component 4. For example, at least one opening 14 typically exists between the first separator 3 and the second separator 5. The existence of the opening(s) 14 allows for the introduction of, for example, electrolyte to the electrochemical component 4 when constructed in a battery.

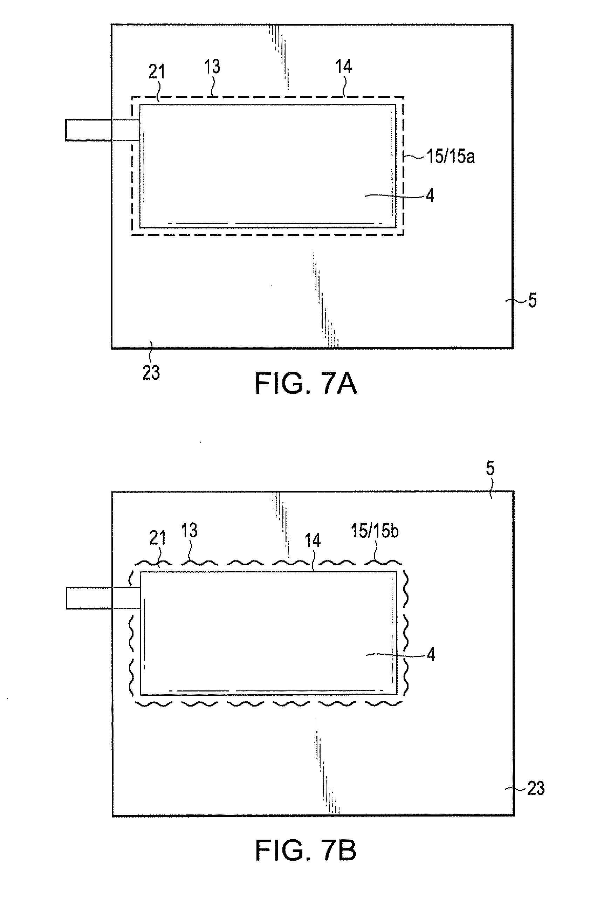

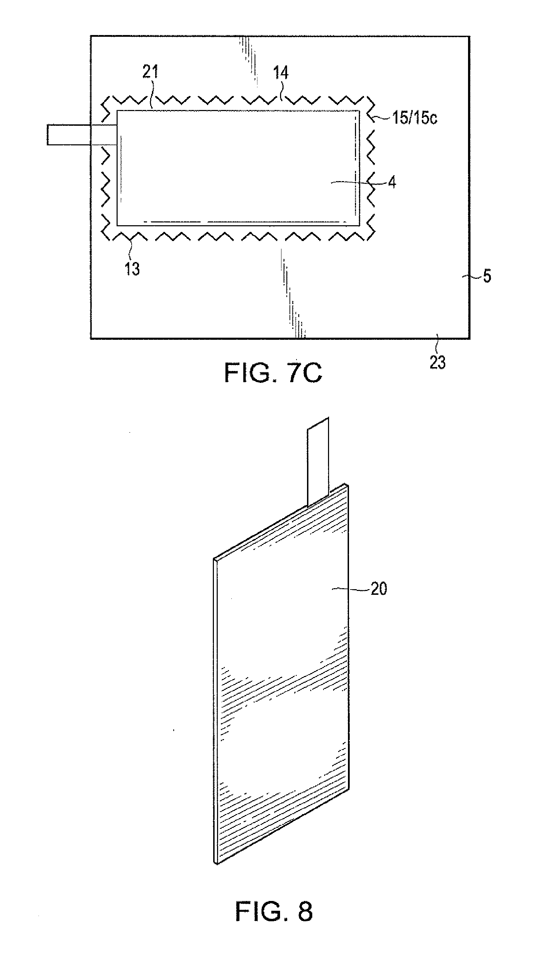

In various embodiments, the first laser beam follows a stitch profile of the melt zone 13 that includes a plurality of zig-zags 15c (Fig. 7C), straight lines 15a (Fig. 7A), or curved lines 15b (Fig. 7B). The stitch profile forms a melt zone 13 that does not completely encircle the solid electrochemical component 4, whether the profile is formed of zig-zags 15c, straight lines 15a, or curved lines 15b. Thus, one or more opening(s) 14 exist, allowing for introduction of fluid or, in particular, electrolyte, to the electrochemical component 4. Because the laser 16 is programmable, the stitch profile can be varied as desired. The stitch profile can also include various combinations of straight, curved and/or zig-zag lines, for example.

In an exemplary embodiment, the second laser beam is next applied around the circumference 21 of the solid electrochemical component 4 in the electrochemical component assembly 6 while at the same time the vacuum 7 of the vacuum plate 1 is applied to the electrochemical component assembly 6. The application of the second laser beam by the laser 16 around the circumference 21 of the solid electrochemical component 4 causes the first 3 and second 5 separators to be cut to form the encapsulated solid electrochemical component 20. The second laser beam has a (second) power level that is higher than that of the first laser beam, and is high enough to cut through the first and second separators 3, 5. The specific power level used for cutting will depend on the material (composition and thickness) of the separator material. Typically, the path of the second (cutting) laser beam will closely follow the circumference of the encapsulated solid electrochemical component 4.

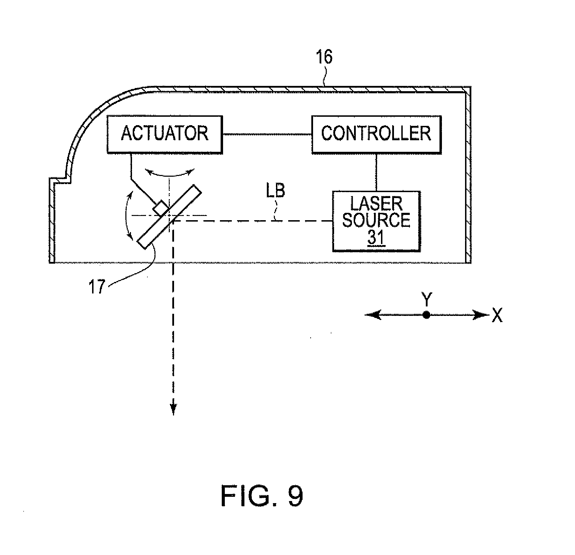

In an exemplary embodiment, the first laser beam and second laser beam are emitted from a stationary laser source (laser 16). The laser beams are reflected with a moving mirror 17 that directs the laser beams to the electrochemical component assembly 6 on the vacuum plate 1 (Fig. 9). The moving mirror 7 moves such that the first laser beam is directed around the circumference 21 of the solid electrochemical component 4 in the electrochemical component assembly 6 to form a stitch profile (Figs. 7A-C) and then the second laser beam is directed around the circumference of the component 4 to "trim" away excess separator material. Thus, the first and second laser beams can be, for example, emitted from the same source, i.e. laser 16. As an alternative to the moving mirror 17, the laser beams can be emitted from a laser head that is capable of being moved by a linear electromechanical actuator. In applying the laser beams, the laser can change the power levels of the laser beams or the speed of movement of laser beams around the circumference of the component 4 based on the particular application being performed. For example, during the cutting step, the power of the second laser beam is set to be higher than the power of the first laser beam such that the second laser beam has enough power to cut through both the first 3 and second 5 separators. Or, for example, during the cutting step, the speed of movement of the second laser beam is set to be lower than the speed of movement of the first laser beam such that the second laser beam is slow enough to accumulate sufficient laser energy on the separators to cut through both the first 3 and second 5 separators.

As schematically shown in Fig. 9, the laser 16 includes a laser source 31 that emits a laser beam LB to movable mirror 17. The mirror 17 is movable in multiple directions as shown by the arrows in Fig. 9 so that the laser beam can be directed around the circumference of the component 4, which lies on an X-Y plane defined by the surface of the vacuum plate 1 of the vacuum table 100. An actuator (for example, a piezoelectric actuator) moves the mirror 17 under the control of a controller (which includes, for example, a CPU, ROM and RAM) which also controls the power level of the laser source 31.

In accordance with a preferred embodiment, the second laser beam is applied, for example, in the melt zone 13 formed by the first laser beam. The application of the second laser beam in the melt zone 13 allows for a very neat and uniform cut of the separators 3, 5 so at to free the encapsulated solid electrochemical component 20 from the extraneous separator material 23. Cutting within the melt zone 13 decreases the possibility of the edges of the separators 3, 5 of the encapsulated solid electrochemical component 20 becoming frayed, curling, or otherwise deforming and interfering in the function of the encapsulated solid electrochemical component 20. Additionally, the use of a laser to cut the separators 3, 5 reduces the likelihood of contamination of the encapsulated solid electrochemical component 20.

The laser 16 can be, for example, a CO₂ laser. Additionally, computer modeling and profiling software is utilized by a computer to run the programs to apply the first and second laser beams to the electrochemical component assembly 6. The software allows for any variation in the size and/or shape of the electrode/electrochemical component. The parameters of the electrode need only be inputted into the modeling/profiling software to accommodate the different sizes and/or shapes of electrodes.

As described in exemplary embodiments, the method of forming the encapsulated solid electrochemical component 20 includes first stacking the first separator 3 on the upper surface 2 of the vacuum table 100. The solid electrochemical component or electrode 4 is then stacked on the upper surface 10 of the first separator 3 to then be covered by the second separator 5 to form the electrochemical component assembly 6. The vacuum of the vacuum plate 1 can be applied during the stacking step forming the electrochemical component assembly 6 and/or after the stacked assembly 6 is formed. Once the vacuum 7 of the vacuum plate 1 is applied to the electrochemical component assembly 6, the laser 16 emits a first laser beam to be applied around the circumference of the solid electrochemical component 4. The first laser beam, having a lower power than that of the second laser beam, is applied around at least a part of the circumference 21 of the solid electrochemical component 4. The portions of the separators 3, 5 subjected to the first laser beam melt and become bonded to one another so as to form a melt zone. While still applying the vacuum 7 of the vacuum plate 1, the laser 16 emits the second laser beam, having a higher power than that of the first laser beam, which is applied around the entire circumference 21 of the solid electrochemical component 4. The second laser beam thus functions to cut the first 3 and second 5 separators so as to release the now encapsulated solid electrochemical component 20 from the extraneous separator material 23.

Once a plurality of encapsulated solid electrochemical component 20 are formed, the encapsulated solid electrochemical components 20 can be used to form a battery or cell. In particular, the method described above can be utilized to encapsulate both cathodes and anodes. Thus, a battery is formed by first alternately stacking encapsulated anodes and encapsulated cathodes. Once the cathodes and anodes are stacked, an electrolyte is provided to the stacked encapsulated anodes and cathodes (the stacked anodes and cathodes and the electrolyte being provided in a housing). Because of the openings 14 formed in the encapsulated anodes and encapsulated cathodes during the encapsulation process, the electrolyte is able to come into contact with the cathodes and anodes within the interior of their separator encapsulation.

As stated above, the encapsulated electrodes can be used in the construction of any battery. In particular, the encapsulated electrodes are used in the construction of a lithium-ion battery.

The illustrated exemplary embodiments of the method of forming encapsulated electrochemical components/electrodes as set forth above are intended to be illustrative and not limiting. Various changes may be made without departing from the spirit and scope of the invention.

## Claims

1. A method of forming an encapsulated solid electrochemical component, the method comprising:
disposing, in order, a first separator, a solid electrochemical component, and a second separator on an upper surface of a vacuum plate to form an electrochemical component assembly;
applying a vacuum with the vacuum plate to the electrochemical component assembly;
applying a first laser beam around at least part of a circumference of the solid electrochemical component in the electrochemical component assembly while applying the vacuum such that portions of the first and second separators around at least part of the circumference of the solid electrochemical component melt and are bonded to each other by the application of the first laser beam forming a melt zone; and
applying a second laser beam around the circumference of the solid electrochemical component in the electrochemical component assembly while applying the vacuum such that the first and second separators around the circumference of the solid electrochemical component are cut by the application of the second laser beam.

2. The method according to claim 1, wherein the solid electrochemical component is an electrode, preferably a battery electrode, most preferably the battery electrode is for a lithium-ion battery and includes lithium therein.

3. The method according to any of the preceding claims, wherein the first and second separators are two separate sheets.

4. The method according to any of the preceding claims, wherein the melt zone does not completely encircle the solid electrochemical component such that at least one opening exists between the first separator and the second separator.

5. The method according to any of the preceding claims, wherein the step of applying the first laser beam follows a stitch profile that includes a plurality of zig-zags, straight lines, or curved lines.

6. The method according to any of the preceding claims, wherein the first separator and the second separator are made of a porous, polymer material.

7. The method according to any of the preceding claims, wherein the vacuum applied through the vacuum plate pulls gas through the first and second separators to cause the first separator, the solid electrochemical component, and the second separator to maintain position while the first and second laser beams are applied to melt, bond, and cut the first and second separators.

8. The method according to any of the preceding claims, wherein, in the step of applying the second laser beam, the second laser beam cuts through the melt zone.

9. The method according to any of the preceding claims, wherein the steps of applying the first and second laser beams include:
emitting the laser beams from a stationary laser source; and
reflecting the laser beams with a moving mirror to direct the laser beams to the electrochemical component assembly on the vacuum plate.

10. The method according to any of the preceding claims, wherein the first and second laser beams are emitted from a single source.

11. The method according to any of the preceding claims, wherein the vacuum is applied with the vacuum plate during the disposing step.

12. The method according to any of the preceding claims, wherein the first laser beam has a first relatively low power and the second laser beam has a second relatively high power, the second relatively high power being higher than the first relatively low power.

13. The method according to any of the preceding claims, wherein the first laser beam is directed around the circumference of the solid electrochemical component at a first relatively fast speed, and the second laser beam is directed around the circumference of the solid electrochemical component at a second relatively slow speed, the first relatively fast speed being higher than the second relatively slow speed.

14. An encapsulated electrochemical component made by the method of any of the preceding claims.

15. A method of making a battery, the method comprising:
forming a plurality of encapsulated solid electrochemical components according to the method of any of the preceding claims, a first set of which are encapsulated cathodes and a second set of which are encapsulated anodes;
alternately stacking the encapsulated anodes and cathodes; and
providing an electrolyte between the stacked encapsulated anodes and cathodes.

16. A battery formed by the method of claim 15.
